# EUROPEAN PATENT APPLICATION

(11) **EP 4 702 891 A1**
(43) Date of publication of application: **04.03.2026**
(21) Application number: 24223841.8
(22) Date of filing: 31.12.2024
(51) Int. Cl.: A47J 31/42, A47J 42/40, A47J 42/46

(54) **ELECTRIC GRINDING APPARATUS AND COFFEE MACHINE**

(30) Priority: 03.09.2024 CN 202411234177
(71) Applicant: Versuni Holding B.V., 1082 MD Amsterdam (NL)
(72) Inventor: LEE, Chi Yuen, 1082 MD Amsterdam (NL); FENG, Xing Zhong, 1082 MD Amsterdam (NL)
(74) Representative: Vollering, Stefanus Franciscus Maria

(57) **Abstract**

This disclosure relates to an electric grinding apparatus and a coffee machine. The electric grinding apparatus includes: a first grinding stone (110); an electric driving apparatus including a motor (170) and a drive shaft (130) driven by the motor (170), where the first grinding stone (110) is mounted to the drive shaft (130) in an axial direction and configured to rotate together with the drive shaft (130) in the axial direction; and a cleaning member (140) mounted to the drive shaft (130) in the axial direction via an overrunning clutch (160), such that when the drive shaft (130) rotates, the cleaning member (140) is driven by the drive shaft (130) to rotate, and when the drive shaft (130) stops rotating, the cleaning member (140) is decoupled from the drive shaft (130) and capable of continuously rotating under an inertia action.

## Description

### FIELD OF TECHNOLOGY

This disclosure relates to electric grinding apparatuses, more specifically an electric grinding apparatus with an improved powder cleaning function.

### BACKGROUND

Nowadays, an increasing number of people enjoy drinking coffee. Consumers use coffee machines to brew coffee. Professionals recommend that coffee beans should be used within 3-5 minutes after grinding to maximize the retention of coffee flavor and aroma. More and more consumers own separate coffee bean grinding apparatuses or grind-brew combination coffee machines to make fresher coffee and explore the perfect grinding size for different coffee beans. However, after coffee beans are ground, a certain amount of ground coffee powder remains in a chamber of the conventional grinding apparatus. When the consumer wants to switch to a different type of coffee bean or make an adjustment to a different size of ground coffee powder, the new powder mixes with the residual old powder. To ensure tasting completely fresh coffee powder, the consumer needs to wait for the next batch of grinding and brewing. Moreover, the residual coffee powder becomes stale, affecting the taste of the next brew. Additionally, the residual coffee powder in the chamber may clump due to high humidity. This causes the coffee powder to clog the grinding apparatus of the coffee machine, preventing new grinding.

### SUMMARY

An objective of this disclosure is to provide an electric grinding apparatus and a coffee machine, aiming to resolve one or more of the above problems and other potential problems.

An aspect of this disclosure provides the electric grinding apparatus. The electric grinding apparatus includes: a first grinding stone; an electric driving apparatus including a motor and a drive shaft driven by the motor, where the first grinding stone is mounted to the drive shaft in an axial direction and configured to rotate together with the drive shaft in the axial direction; and a cleaning member mounted to the drive shaft in the axial direction via an overrunning clutch (overrunning clutch), such that when the drive shaft rotates, the cleaning member is driven by the drive shaft to rotate, and when the drive shaft stops rotating, the cleaning member is decoupled from the drive shaft and capable of continuously rotating under an inertia action.

According to this disclosure, even if the drive shaft stops rotating, the overrunning clutch allows the cleaning member to be decoupled from the drive shaft and to continuously rotate under the inertia action, thereby effectively cleaning the ground powder and preventing powder residue.

In some embodiments, the overrunning clutch may include: an inner ring mounted to the drive shaft; an outer ring mounted to the cleaning member; and a sprag (sprag) located between the inner ring and the outer ring.

In some embodiments, the electric driving apparatus further includes a worm gear transmission apparatus.

In some embodiments, the worm gear transmission apparatus includes a worm mounted to an output shaft of the motor and a gear meshed with the worm, and the drive shaft is mounted to the gear and driven by the gear.

In some embodiments, the electric driving apparatus may further include a housing and a partition plate, where the partition plate divides a chamber defined by the housing into a grinding chamber and a driving chamber in the axial direction, the first grinding stone is arranged in the grinding chamber, and at least a part of the electric driving apparatus is arranged in the driving chamber.

In some embodiments, the electric driving apparatus may further include a second grinding stone mounted to the housing, where the second grinding stone includes a cylinder arranged around the first grinding stone, and an inner wall surface of the cylinder is configured to interact with the second grinding stone to grind an object to be ground into powder.

In some embodiments, the cleaning member may include a disk and multiple cleaning teeth extending radially from the disk, where the cleaning teeth extend into a powder region in the grinding chamber and are configured to clean the ground powder when the cleaning member rotates.

In some embodiments, the housing further includes a powder outlet communicating with the grinding chamber, and the powder outlet is arranged on a radial outer side of the cleaning member.

In some embodiments, the first grinding stone includes a conical shape gradually increasing from a top side to a bottom side in the axial direction and includes multiple grinding strips extending helically.

A second aspect of this disclosure provides the coffee machine, including the electric grinding apparatus according to any one of the embodiments of the first aspect.

A third aspect of this disclosure provides a household electrical appliance, including the electric grinding apparatus according to any one of the embodiments of the first aspect.

### BRIEF DESCRIPTION OF THE DRAWINGS

The above and other objectives, features, and advantages of the embodiments of this disclosure will become more apparent by reading the following detailed description with reference to the accompanying drawings. In the drawings, several embodiments of this disclosure are illustrated using examples, which should not be considered limitations.
FIG. 1 is an overall schematic diagram of a coffee machine including an electric grinding apparatus according to an embodiment of this disclosure.
FIG. 2 is a schematic three-dimensional view of the electric grinding apparatus according to an embodiment of this disclosure.
FIG. 3 is a schematic cross-sectional view of the electric grinding apparatus in an axial direction according to an embodiment of this disclosure.
FIG. 4 is a schematic exploded view of a grinding assembly of the electric grinding apparatus according to an embodiment of this disclosure.
FIG. 5 is a schematic cross-sectional view of the electric grinding apparatus in a direction perpendicular to the axial direction according to an embodiment of this disclosure.

### DESCRIPTION OF THE EMBODIMENTS

Unless otherwise indicated, corresponding numbers and symbols in different drawings generally refer to corresponding regions. The drawings are drawn to clearly illustrate the relevant aspects of the embodiments and are not necessarily drawn to scale. The edges of features shown in the drawings do not necessarily indicate the limits of the features.

In the following description, various specific details are set forth to provide a thorough understanding of various examples of embodiments according to this description. Embodiments may be obtained without one or more of the specific details, or with other methods, assemblies, materials, and the like. In other cases, well-known structures, materials, or operations are not shown or described in detail to avoid obscuring aspects of the embodiments.

References to "an embodiment" or "one embodiment" within the framework of this specification are intended to indicate that a particular configuration, structure, or feature described in connection with the embodiment is included in at least one embodiment. Therefore, phrases such as "in embodiments", and "in an embodiment" in various aspects in this specification are not necessarily all referring to the same embodiment. Furthermore, the particular configuration, structure, or feature may be combined in any suitable manner in one or more embodiments.

In this disclosure, orientation terms such as "upper", "lower", "top side", "bottom side", "front", "rear", "inner", and "outer" are defined relative to the placement orientations or positions of parts as shown in the drawings. It should be understood that these orientation terms are relative concepts used for relative description and clarification and are not intended to indicate or imply that the referred apparatus or component must have a particular orientation or be constructed and operated in a specific orientation. They may change correspondingly with the change in the placement orientations of parts in the drawings and therefore should not be construed as limiting this application.

An electric grinding apparatus according to the embodiments of this disclosure is described in detail below with reference to the accompanying drawings. It should be understood that in the illustrated embodiments, a coffee machine combined with an electric grinding apparatus is used as an example of a household electrical appliance, so as to describe the inventive concepts of this disclosure. It should be understood that the inventive concepts of this disclosure can also be applied to other household electrical appliances, such as soymilk machines or other household electrical appliances with a powder grinding function.

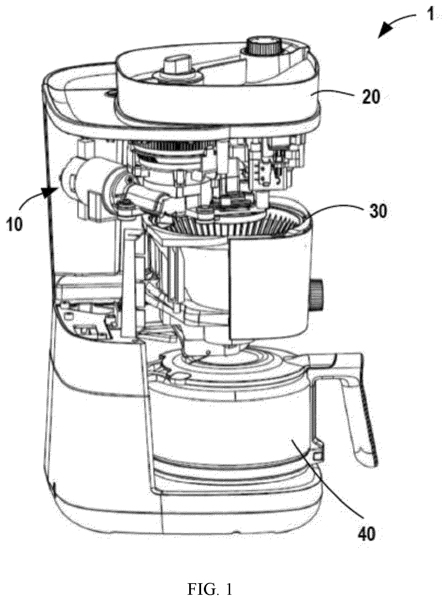

FIG. 1 is an overall schematic diagram of a coffee machine 1 including an electric grinding apparatus 10 according to an embodiment of this disclosure. As shown in FIG. 1, the coffee machine 1 includes a coffee bean container 20 located on the top side, the electric grinding apparatus 10 located below the coffee bean container 20, and a coffee powder basket 30 located below the electric grinding apparatus 10. A user can place coffee beans in the coffee bean container 20 and start the electric grinding apparatus 10. The electric grinding apparatus 10 operates to grind the coffee beans into powder, and the powder can be collected in the coffee powder basket 30. FIG. 1 also shows a coffee pot 40 arranged below the coffee powder basket 30.

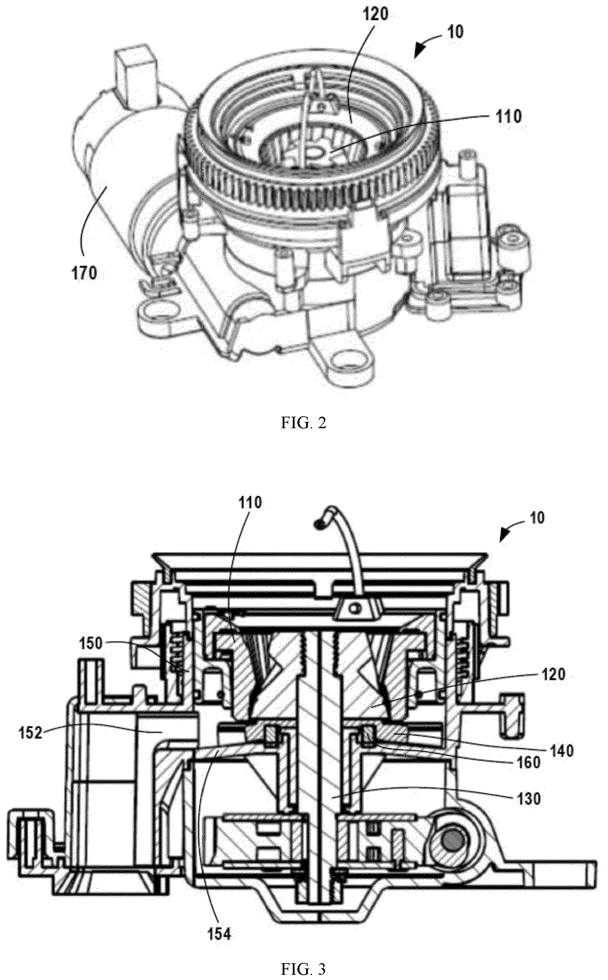

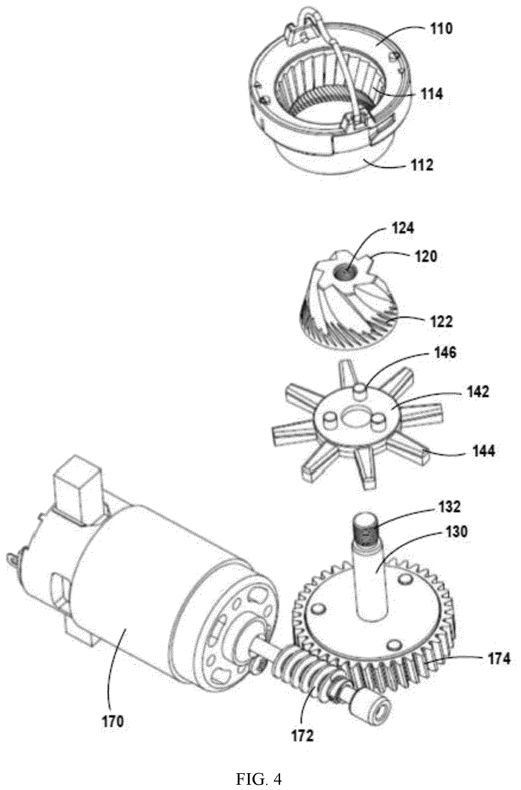

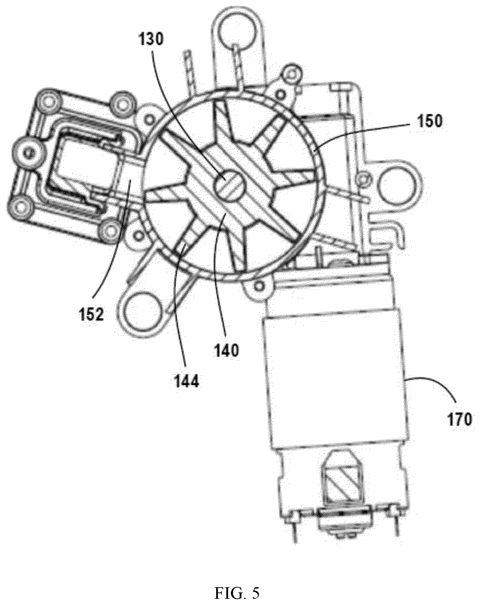

The structural details of the electric grinding apparatus 10 according to an embodiment of this disclosure are described below with reference to FIGs. 2 to 5. FIG. 2 is a schematic three-dimensional view of the electric grinding apparatus according to an embodiment of this disclosure, and FIG. 3 is a schematic cross-sectional view of the electric grinding apparatus in an axial direction according to an embodiment of this disclosure. FIG. 4 is a schematic exploded view of a grinding assembly of the electric grinding apparatus according to an embodiment of this disclosure. FIG. 5 is a schematic cross-sectional view of the electric grinding apparatus in a direction perpendicular to the axial direction according to an embodiment of this disclosure.

As shown in FIGs. 2 and 3, the electric grinding apparatus 10 includes a first grinding stone 110 and an electric driving apparatus. The electric driving apparatus may include a motor 170 and a drive shaft 130 driven by the motor 170. The first grinding stone 110 is mounted to the drive shaft 130 in the axial direction. The electric driving apparatus may be any suitable driver. In some embodiments, as shown in FIG. 4, the electric driving apparatus may include a worm gear transmission apparatus. In some embodiments, the worm gear transmission apparatus may include a worm 172 mounted to an output shaft of the motor 170 and a gear 174 meshed with the worm, and the drive shaft 130 is mounted to the gear 174 and driven by the gear 174. In some embodiments, the drive shaft 130 may be mounted to the first grinding stone 110 through threaded connection. As shown in FIG. 4, an end of the drive shaft 130 may include a thread 132, and the first grinding stone 110 may include a threaded hole 124 adapted to engage with the thread 132. Thus, the first grinding stone 110 can be conveniently mounted to the drive shaft 130. When the motor 170 operates, the motor 170 drives the drive shaft 130 to rotate, and the first grinding stone 110 rotates together with the drive shaft in the axial direction. In some embodiments, as shown in FIG. 4, the first grinding stone 110 may include a conical shape gradually increasing from a top side to a bottom side in the axial direction and include multiple grinding strips 122 extending helically.

In some embodiments, as shown in FIGs. 3 and 4, the electric grinding apparatus 10 may further include a fixed second grinding stone 120. The second grinding stone 120 may be mounted to the housing 150 of the electric grinding apparatus 10. The housing 150 can define a grinding chamber suitable for to-be-ground objects (such as coffee beans) and a powder outlet 152 allowing powder to be discharged out of the grinding chamber. In some embodiments, the second grinding stone 120 may be shaped as a cylinder 112, with the cylinder 112 arranged opposite the first grinding stone 110 therein. An inner wall surface of the cylinder 112 may be provided with grinding teeth 114, and the grinding teeth 114 of the second grinding stone 120 are configured to interact with the first grinding stone 110 to grind the object to be ground into powder.

In some embodiments, as shown in FIG. 3, a partition plate 154 may be provided in the housing 150, and the partition plate 154 divides a chamber defined by the housing 150 into a grinding chamber and a driving chamber in the axial direction. As for the grinding assembly, the first grinding stone 110, the second grinding stone 120, and coffee beans may be arranged in the grinding chamber, while the driving components (for example, the motor 170 and related transmission means) used for rotating the drive shaft 130 may be arranged outside the grinding chamber. In the illustrated embodiment, as shown in FIG. 3, the gear of the worm gear transmission apparatus may be arranged in the driving chamber.

In some embodiments, as shown in FIGs. 3 to 5, the electric grinding apparatus 10 further includes a cleaning member 140. The cleaning member 140 may be mounted to the drive shaft 130 in the axial direction. The cleaning member 140 is shaped to be suitable for cleaning powder in the grinding chamber. The housing 150 can define the powder outlet 152 allowing powder to be discharged out of the grinding chamber (see FIGs. 3 and 5). The powder outlet 152 communicates with the grinding chamber and may be arranged on the radial outer side of the cleaning member 140.

In some embodiments, as shown in FIG. 4, the cleaning member 140 may include a disk 142 and multiple cleaning teeth 144 extending radially from the disk 142. The cleaning teeth 144 extend into a powder region and are configured to clean the powder in the grinding chamber when the cleaning member 140 rotates. In some embodiments, as shown in FIGs. 3 and 4, the cleaning member 140 may be arranged in a region where powder accumulates between the partition plate 154 and the first grinding stone 110. The cleaning member 140 may be provided with a protrusion 146, and the protrusion 146 can fit into a hole in the first grinding stone 110. During the operation of the electric grinding apparatus 10, as shown in FIG. 5, the cleaning member 140 can rotate along with the drive shaft 130, thereby performing a cleaning operation while the first grinding stone 110 performs a grinding operation. The ground powder is discharged from the powder outlet 152 through the rotation of the cleaning teeth 144.

In some embodiments, the cleaning member 140 is fixedly mounted to the drive shaft 130. In this case, as long as the drive shaft 130 rotates, the cleaning member 140 also rotates. When the drive shaft 130 stops rotating, the cleaning member 140 also stops rotating. In this case, the ground powder inevitably remains in the spaces between adjacent teeth. According to this disclosure, instead of fixedly mounting the cleaning member 140 to the drive shaft 130, the cleaning member 140 is mounted to the drive shaft 130 via an overrunning clutch 160. When the drive shaft 130 rotates, the overrunning clutch 160 allows the cleaning member 140 to rotate synchronously with the drive shaft; and when the drive shaft 130 stops rotating, the overrunning clutch 160 allows the cleaning member 140 to continuously rotate freely under its inertia. In this process, even if the drive shaft 130 stops rotating, the cleaning member 140 can continuously rotate under its inertia, thereby discharging residual ground powder from the grinding chamber. In some embodiments, for example, after the drive shaft 130 stops rotating, the cleaning member 140 still rotates for several turns or a few seconds under its inertia. Thus, the residual ground powder can be effectively prevented.

In some embodiments, the overrunning clutch 160 acts as a one-way bearing. The overrunning clutch 160 may include: an inner ring mounted to the drive shaft 130; an outer ring mounted to the cleaning member 140; and a sprag located between the inner ring and the outer ring. With the use of the sprag, the overrunning clutch 160 allows the cleaning member 140 to rotate along with the drive shaft 130 in a predetermined direction, which corresponds to the grinding direction. When the drive shaft stops rotating, the overrunning clutch 160 allows the cleaning member 140 to be decoupled from the drive shaft 130 and rotate one or more turns in the predetermined direction. It should be understood that the overrunning clutch 160 may be implemented in other suitable forms.

Through the teachings given in the above description and the related drawings, many modifications and other implementations of this disclosure presented here will be recognized by those skilled in the related art of this disclosure. Therefore, it should be understood that the implementations of this disclosure are not limited to the specific implementations disclosed, and modifications and other implementations are intended to be included within the scope of this disclosure. Additionally, although exemplary implementations are described above with reference to related drawings in the context of certain exemplary combinations of components and/or functions, it should be realized that alternative implementations may provide different combinations of components and/or functions without departing from the scope of this disclosure. In this regard, for example, other combinations of components and/or functions different from those explicitly described above are also anticipated to be within the scope of this disclosure. Although specific terms are used herein, they are used in a general and descriptive sense only and are not intended to be limitations.

## Claims

1. An electric grinding apparatus, comprising:
a first grinding stone (110);
an electric driving apparatus comprising a motor (170) and a drive shaft (130) driven by the motor (170), wherein the first grinding stone (110) is mounted to the drive shaft (130) in an axial direction and configured to rotate together with the drive shaft (130) in the axial direction when the motor (170) operates; and
a cleaning member (140) mounted to the drive shaft (130) in the axial direction via an overrunning clutch (160), such that when the drive shaft (130) rotates, the cleaning member (140) is driven by the drive shaft (130) to rotate, and when the drive shaft (130) stops rotating, the cleaning member (140) is decoupled from the drive shaft (130) and capable of continuously rotating under an inertia action.

2. The apparatus according to claim 1, wherein the overrunning clutch (160) comprises:
an inner ring mounted to the drive shaft (130);
an outer ring mounted to the cleaning member (140); and
a sprag located between the inner ring and the outer ring.

3. The apparatus according to claim 1, wherein the electric driving apparatus further comprises a worm gear transmission apparatus.

4. The apparatus according to claim 3, wherein the worm gear transmission apparatus comprises a worm (172) mounted to an output shaft of the motor (170) and a gear (174) meshed with the worm, and the drive shaft (130) is mounted to the gear (174) and driven by the gear (174).

5. The apparatus according to any one of claims 1 to 4, further comprising a housing (150) and a partition plate (154), wherein the partition plate (154) divides a chamber defined by the housing (150) into a grinding chamber and a driving chamber in the axial direction, the first grinding stone (110) is arranged in the grinding chamber, and at least a part of the electric driving apparatus is arranged in the driving chamber.

6. The apparatus according to claim 5, further comprising a second grinding stone (120) mounted to the housing (150), wherein the second grinding stone (120) comprises a cylinder (112) arranged around the first grinding stone (110), and an inner wall surface of the cylinder (112) is configured to interact with the second grinding stone (120) to grind an object to be ground into powder.

7. The apparatus according to claim 5, wherein the cleaning member (140) comprises:
a disk (142); and
multiple cleaning teeth (144) extending radially from the disk (142), wherein the cleaning teeth (144) extend into a powder region in the grinding chamber and are configured to clean the ground powder when the cleaning member (140) rotates.

8. The apparatus according to claim 5, wherein the housing (150) further comprises a powder outlet (152) communicating with the grinding chamber, and the powder outlet (152) is arranged on a radial outer side of the cleaning member (140).

9. The apparatus according to any one of claims 1 to 8, wherein the first grinding stone (110) comprises a conical shape gradually increasing from a top side to a bottom side in the axial direction and comprises multiple grinding strips (122) extending helically.

10. A coffee machine, comprising the electric grinding apparatus according to any one of claims 1 to 9.

11. A household electrical appliance, comprising the electric grinding apparatus according to any one of claims 1 to 9.
